# EUROPEAN PATENT SPECIFICATION

(11) **EP 2 210 541 B1**
(45) Date of publication and mention of the grant of the patent: **20.06.2012**
(21) Application number: 10159184.0
(22) Date of filing: 05.09.2008
(51) Int. Cl.: A47J 36/02

(54) **Induction cookware**
Induktionskochgeschirr
Ustensile de cuisine à induction

(30) Priority: 07.09.2007 US 970795 P; 07.09.2007 US 970766 P; 07.09.2007 US 970775 P; 07.09.2007 US 970785 P; 14.02.2008 US 31206; 14.02.2008 US 31214; 14.02.2008 US 31220; 14.02.2008 US 31226
(43) Date of publication of application: 28.07.2010
(62) Divisional of application: 08829867.4
(73) Proprietor: Bose Corporation, Framingham, MA 01701-9168 (US)
(72) Inventor: England, Raymond O, Framingham, MA 07101-9168 (US); Froeschle, Thomas A, Framingham, MA 01701-9168 (US); Beverly, David W, Framingham, MA 01701-9168 (US)
(74) Representative: Brunner, Michael John

(56) References cited:
- DE-A1- 10 019 968
- DE-U1-202005 010 652
- GB-A- 1 522 383

## Description

### TECHNICAL FIELD

This disclosure relates to cookware for induction cooktops.

### BACKGROUND

Some conventional cooktops deliver heat to a cooking utensil (e.g., a pan, pot, skillet, etc.) by for example a gas flame or electric resistance coil. In these cooktops, any material that lies between the heat source and the cooking utensil (e.g., a glass cooktop) is also heated. Induction cooktops work differently. In an induction cooktop, an alternating current in an induction coil produces a time dependent magnetic field that induces eddy currents in electrically conductive materials near the coil, such as a ferromagnetic component (or the target material) of induction cooking utensils. As eddy currents flow within the target material, it becomes hot via a joule heating mechanism. Heat in the target is conducted through the body of the cooking utensil to the food surface, and the food is cooked. Unlike gas or electric cooktops, induction cooktops will not directly heat non-conductive materials (such as a glass cooktop) that are placed between the induction coil and the target material. However, any such non-conductive materials placed between the induction coil and the target material may be indirectly heated by the radiant, convective, or conductive heat emanating from the hot target material.

GB-A-1522383 discloses an induction heating apparatus in the form of a cook pot with inner and outer walls with a sealed gap between, and evacuating the gap such that there is either a vacuum, or injecting a low pressure inert gas in the gap, and sealing. It discloses insulation pellets fixed in the gap disposed to prevent the deformation of the outer plate by atmospheric pressure. It also teaches that the insulation between the inner and outer walls provides mechanical support between the inner and outer walls.

### SUMMARY

According to the present invention there is provided a cooking utensil for use with an induction cooktop having an induction coil, the cooking utensil comprising:
an inner wall comprising an electrically conductive target layer in which heat is generated by the induction coil;
an outer wall within which the inner wall is nested and comprising an electrically non-conductive layer that cooperates with the inner wall to form a sealed gap between the inner wall and the outer wall and further cooperates with the inner wall to provide the cooking utensil a pan-like shape having a bottom portion and a side wall portion; and
a vacuum-sealed thermal insulator disposed within the gap within at least the bottom portion and spaced away from contact with the inner wall by a portion of the gap, wherein the vacuum-sealed thermal insulator is comprised of a thermally resistant material and a pair of sheets enclosing the thermally resistant material in a vacuum.

Generally, a cooking utensil (such as a stock pot, frying pan, sauce pan, or other type of cookware) for use with an induction cooktop is constructed such that it heats the food/liquid within its chamber to a desired cooking temperature while maintaining a relatively cool outer surface, and preferably an outer surface that is cool enough to pick up with a person's bare hands and immediately set on a wooden (or other) table without damaging it.

Implementations may include, and are not limited to, one or more of the following features. The outer wall may include an impermeable material to aid in reducing the permeation gas molecules through it, and/or may include a passage opening into the gap to permit the gap to be filled with argon or other gas. The inner wall may include a cooking layer and/or a heat spreader layer to conduct heat from the target layer to the cooking layer. The argon gas may be maintained at a pressure less than atmospheric pressure at sea level.

The cooking utensil may further include a reflective layer that may be non-contiguous to interrupt a flow of current.

In one aspect, a method of making a cooking utensil includes:
joining an outer wall comprising an electrically non-conductive layer to an inner wall comprising an electrically conductive target layer in which heat is able to be generated by an induction coil of an induction cooktop to define a gap between the inner wall and the outer wall such that the inner wall is nested within the outer wall and such that the inner wall and the outer wall cooperate to provide the cooking utensil with a pan-like shape having a bottom portion and a side wall portion; and
disposing within the gap, spaced away from contact with the inner wall by a portion of the gap and within at least the bottom portion, a vacuum-sealed thermal insulator comprising a thermally resistant material and a pair of sheets enclosing the thermally resistant material in a vacuum.

Implementations may include, and are not limited to, one or more of the following features. The method may further include joining the outer and inner walls in an argon gas environment. The method may further include forming a passage through a portion of the outer wall, filling the gap with argon gas through the passage, and sealing the passage. The method may further include disposing a piece of getter material within the gap, activating the getter material subsequent to joining the outer wall to the inner wall to remove a gas other than the argon from within the gap. The method may further include selecting a quantity and type of getter material to remove a selected quantity and composition of gases from within the gap to achieve a gaseous environment within the gap made up of argon gas at a pressure less than atmospheric pressure at sea level.

The getter material may be heat activated and may have an activation temperature within the normal range of the cooking utensil (e.g., about 100 and 275°C), or it may be activated at higher temperatures (e.g., about 350 and 500°C.).

At least one sheet of the pair of sheets of the vacuum-sealed thermal insulator may comprise silicon-dioxide.

At least one sheet of the pair of sheets of the vacuum-sealed thermal insulator may comprise a metalized polymer.

The vacuum-sealed thermal insulator may be affixed to an inner surface of the outer wall that defines a portion of the gap.

A thermal mat can be disposed within a portion of the gap within the side wall portion, the thermal mat comprising a fibrous material and an aerogel, and wherein the thermal mat is affixed to a surface of the outer wall that defines a portion of the gap.

The target layer may be disposed within a portion of the gap within the bottom portion, and the vacuum-sealed thermal insulator may extend further across the bottom portion than does the target layer.

A piece of getter material may be disposed within the gap and activating the getter material subsequent to joining the outer wall to the inner wall can be used to remove a gas other than the argon from within the gap.

### BRIEF DESCRIPTION OF THE DRAWINGS

Examples of cooking utensils, including some according to the present invention are shown in the accompanying drawings, in which:
FIGS. 1A and 2 are cross-sectional views of induction cookware.
FIG. 1B is a detailed cross-sectional view of a portion of the cooking utensil shown in FIG. 1 A.
FIGS. 3A-3B are partial cross-sectional views of an inner wall of an induction cooking utensil.
FIG. 4A is a cross-sectional view an induction cooking utensil according to the invention.
FIG. 4B is an exploded perspective view of the cooking utensil of FIG. 4A.
FIG. 5 is a cross-sectional view an induction cooking utensil according to the invention.
FIG. 6 is a cross-sectional view an induction cooking utensil according to the invention.

### DETAILED DESCRIPTION

Cookware used with an induction cooktop may be designed to rapidly heat food or liquid while maintaining an outer surface that is cool enough to handle with bare hands or directly place on a wooden dining table (or other heat sensitive surface) without causing damage. To do this, the cookware should be constructed in a way so that any component between the induction coil and the target allows the magnetic field produced by the induction coil to reach the target (that is the component should be essentially invisible to the magnetic field) and also have a high thermal resistance (to abate radiant, convective, and conductive heat transfer from the target material to the outside of the cookware).

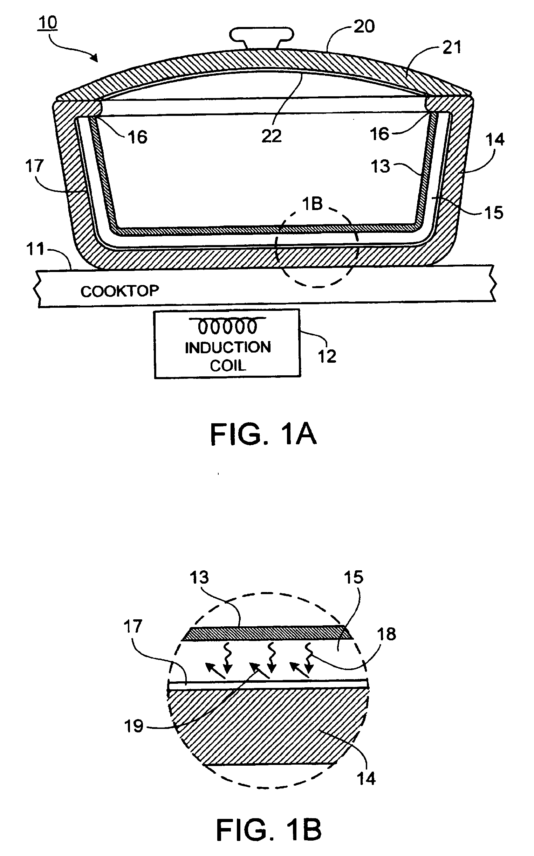

For example, as shown in FIG. 1A, a cooking utensil 10 sits on the surface 11 of an induction cooktop above the cooktop's induction coil 12. The cooking utensil 10 includes an inner wall 13 and outer wall 14 separated by a vacuum gap 15 and attached at a joint 16. A thin layer of radiant heat reflective material 17 is disposed between the inner and outer walls on the inner surface of the outer wall 14.

The inner wall 13 is the target of the induction coil 12 and is formed of an electrically conductive material, and preferably a ferromagnetic material such as 410 stainless steel. The material of the inner wall 13 may be engineered to have a particular Curie point to help prevent the inner wall 13 from exceeding a predetermined temperature (e.g., 250°C-275°C).

The outer wall 14 is designed to stay relatively cool even while the inner wall 13 (and food or liquid within the cooking utensil) is heated to high temperatures for extended periods of time. For example, the induction cooktop may heat the target material to 233°C-275°C while the outer surface of the cooking utensil 10 is maintained at about 60°C or less. In this example, the outer wall 14 is formed at least in part, of an electrically non-conductive material (e.g., an insulator having a resistivity greater than about one ohm-meter), such as glass ceramic, glass, or plastic (e.g., a plastic such as polyether sulfone resin (PES), Liquid Crystal Polymer (LCP), or Polyetheretherketone (PEEK)). For implementations that include a vacuum gap 15 between the inner and outer walls, the material of the outer wall 14 is also preferably formed of material that is impermeable to atmospheric gasses, and either inherently does not outgas, or is provided with a barrier material which prevents outgassing (to preserve the vacuum). Applications which include a vacuum gap 15 (pressures of between 0.001 and 1 torr) significantly reduce both conductive and convective heat transfer from the target surface to the outer surface.

The thin layer of reflective material 17 reflects a significant portion of the radiant heat radiated by the inner wall 13 (i.e., the target of the induction coil) away from the outer surface, thus helping to keep the outer wall 14 relatively cool. This reflective layer 17 may be formed of any material having a high reflectance (e.g., greater than 80% and preferably between 90-100%) and low emissivity (e.g., an emissivity less than about 0.20 and preferably around 0.01-0.04) for radiation in the infrared and visible electromagnetic spectra (e.g., radiation having a wavelength of between 0.4 µm and 1x104 µm). As shown in FIG. 1B, heat 18 radiated from the inner wall 13 is reflected 19 by the reflective layer 17 away from the outer wall 14. This permits the cooking utensil 10 to have a thinner cross-sectional profile than would otherwise be required to maintain the temperature differential between the inner and outer walls. (A cooking utensil without the reflective layer 17 would require a larger insulation gap and/or thicker outer wall to maintain the same temperature differential). In such cases, the target is moved further away from the induction coil 12, thus increasing the energy usage of the coil 12 and reducing the coupling efficiency between the coil 12 and the target.

The reflective layer 17 may lie between the induction coil 12 and the target (as is shown in FIG. 1A), and, as such, the reflective layer 17 should be designed to prevent it from attenuating a significant portion of the magnetic field. In other words, the reflective layer 17 should be designed to be essentially invisible to the magnetic field created by the induction coil 12. For example, in some implementations the reflective layer 17 may be formed of a dielectric material which is non-conductive and thus does not attenuate the magnetic field. However, in some implementations the reflective layer 17 may be formed of a conductive material such as a metal (e.g., pure or alloy forms of gold, silver, aluminum, palladium, nickel, etc.). In this case, the conductive reflective layer 17 is made thin enough to prevent it from attenuating a significant portion of the magnetic field produced by the induction coil 12. The thickness of a conductive reflective layer 17 may be designed to be less than the skin depth of the material (at the frequency of operation of the induction coil). For example, in the cooking utensil 10 example of FIGS. 1A-1 B the reflective layer 17 is formed of silver and has a thickness of on the order of about 1000x10⁻¹⁰ meters (the figures including FIGS. 1A-1B are not drawn to scale), which is about three orders of magnitude less than the skin depth of silver (approximately 3.7x10⁻⁴ meters at 30kHz). Also, some percentage of the conductive reflective layer 17 may be etched away to create interruptions in the current path. Breaking the current path that would otherwise be induced in the reflective layer 17 by the field (e.g., etching a grid or other pattern in the reflective layer) may allow for design of a thicker conductive reflector (e.g., reflective layers that are roughly equal to or exceeding the skin depth of the material at the induction coil frequency of operation).

The reflective layer 17 may be formed using any known technique for the particular material. For example, a dielectric reflective layer such as Spectraflect® by Labsphere in North Sutton, New Hampshire USA (www.labspere.com) may be coated onto the inner surface of the outer wall 14. Other dielectric reflectors may be produced in sheets and may be adhered to the outer wall 14. Other metallic reflectors may be coated on thin-film polymeric substrates such as Kapton® by E. I. du Pont de Nemours and Company, Wilmington, DE, USA, which in turn may be adhered to the outer wall 14. Additionally, evaporation coating may be used to deposit a thin layer of a metallic reflector on the inner surface of the outer wall 14.

It should be noted that the reflective layer 17 need not be attached to the outer wall 14. In some implementations, the reflective layer 17 may be disposed on the outer surface of the inner wall 13. In other implementations, the reflective layer 17 may be a separate structure disposed between the inner and outer walls; for example, a layer of thermal insulating material (e.g., aerogel) may be disposed between the inside of the outer wall 14 and the reflective layer 17.

Referring again to FIG. 1A, the cooking utensil 10 includes a lid 20 that is formed of a thermally insulating material 21 and includes a layer of reflective material 22 on its inner surface. This layer of reflective material 22 reflects heat radiated from the inside of the cooking utensil 10 away from the exterior surface of the lid 20, thus helping to keep the lid 20 cool and the chamber of the cooking utensil 10 warm.

The joint 16 between the inner and outer walls may be formed using any known joining technique (e.g., joining with a high-temperature adhesive, mechanical seal (such as an o-ring), or a brazed joint). For implementations that include a vacuum gap 15 between the inner and outer walls (such as shown in FIGS. 1A-1B), the gap 15 between the inner and outer walls may be evacuated during the joining process, or the joining process may take place in a vacuum chamber.

In an implementation that includes a vacuum gap 15, the pressure in the gap 15 will increase over time regardless of the materials selected for the walls 13, 14 and the quality of the joint 16 due to outgassing of the bulk materials and leakage at the joint 16. Metallic and glass/glass ceramic materials will outgas very slowly, while polymeric materials will outgas relatively rapidly. As the pressure increases, the thermal resistance of the cooking utensil 10 diminishes. One technique for helping to slow the leakage of gas into a vacuum gap 15 for a polymeric material is to seal the outer wall 14 using a thin film coating such as an ultra low-outgassing epoxy or a metallic coating. In addition, however, a getter material may be disposed between the inner and outer walls to help preserve the vacuum over time (and thus also helping to maintain the cookware's thermal resistance over time).

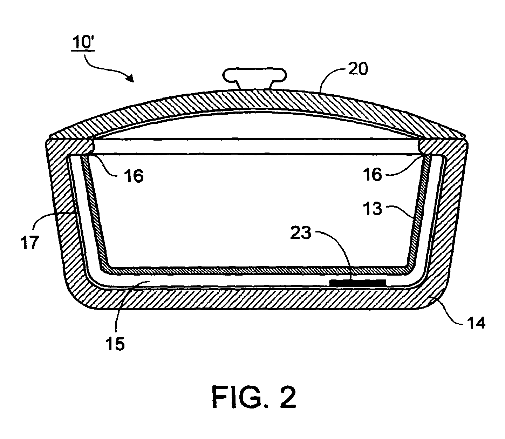

For example, as shown in FIG. 2, a cooking utensil 10' is identical in construction to the example shown and described in FIG. 1 except that it includes an amount of a getter material 23 (e.g., a Zirconium-based alloy available from SAES Getters S.p.A. in Milan, Italy (www.saesgetters.com)) attached (e.g., by welding or adhering) to the inside of the outerwall 14 in the gap 15. The getter material 23 may be pre-activated and installed into the cookware 10' in an active state, or alternatively, it may be installed in an inactive state and then activated by heating the cookware 10' after assembly. When the getter material 23 is in an active state, it will absorb gas (e.g., N₂, O₂, CO, and CO₂) that has leaked into the gap 15 between the inner and outer walls and thus preserves the vacuum.

Getter material 23 may also be used to reduce the pressure existing between the inner and outer chambers. For example, a larger amount of getter material may be placed between the inner and outer walls and then activated after the walls 13, 14 are joined to form the vacuum, however the getter will not absorb Argon gas, which is present in the atmosphere. Alternatively, the air in the gap 15 between the inner and outer walls may be evacuated during the joining process to achieve a vacuum at a certain magnitude (e.g., 1 torr) and then getter material may be activated to increase the magnitude of the vacuum (e.g., to 1 x10⁻³ torr).

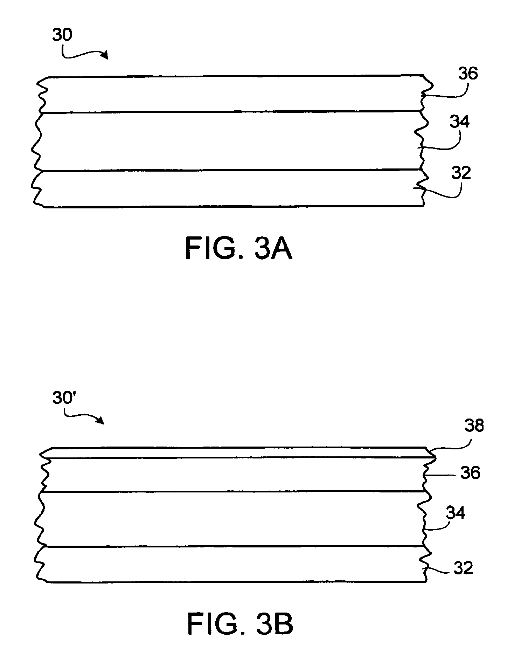

While the cookware 10, 10' illustrated thus far show single layer inner and outer walls, other implementations may use multi-layered inner and/or outer walls. For example, as shown in FIG. 3A, an inner wall of an induction cook cooking utensil 30 includes a three-layer design that includes a lower layer 32, middle layer 34, and upper layer 36. The lower layer 32 is formed of a material designed to be a good target for the induction coil 12, such as 410 stainless steel having a thickness of roughly 0.76mm. The middle layer 34 is formed of a material, such as 1060 aluminum, that effectively and evenly spreads heat generated in the target material. Finally, the upper layer 36 is formed of a material such as 305 stainless steel having a thickness of about 0.8mm. FIG. 3B shows a similar multi-layered design, except in this example, a non-stick layer 38 (e.g., PEEK available from Victrex Company in Conshohocken, PA (www.victrex.com), or Teflon® available from E. I. du Pont de Nemours and Company in Wilmington, DE (www.dupont.com)) is applied on the uppermost surface of the inner wall 36 to help prevent food and liquid from sticking to the cooking utensil 30'.

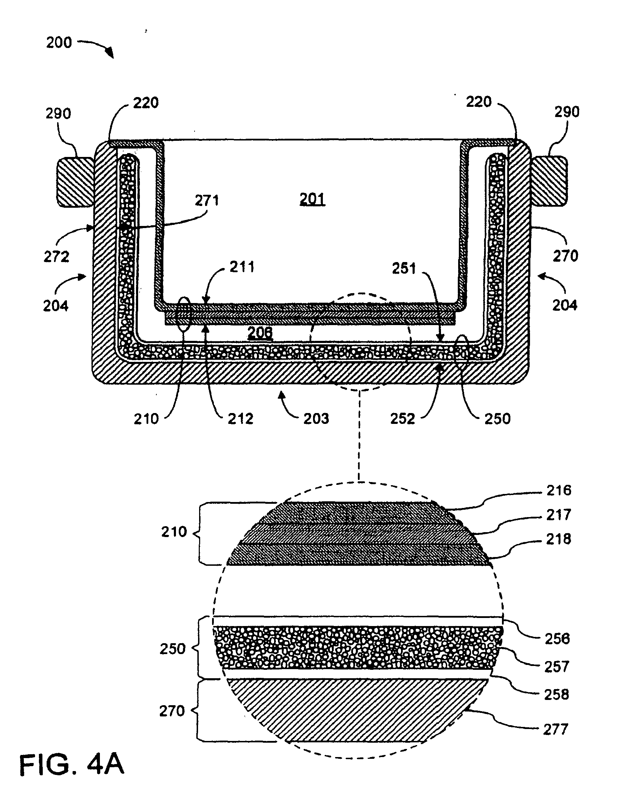

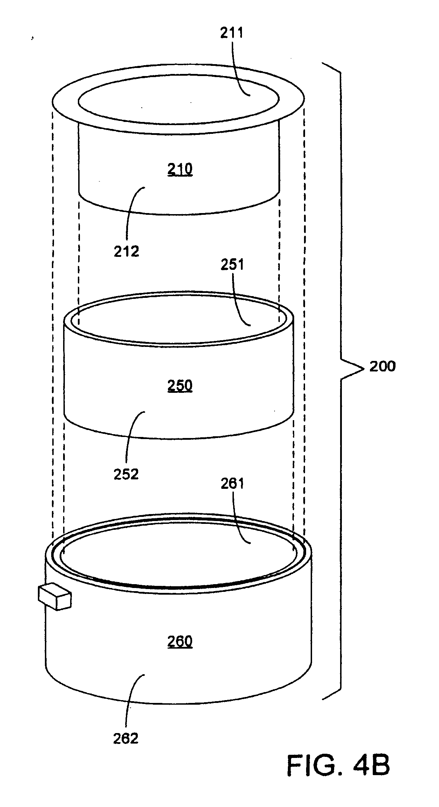

An example of a utensil, falling within the scope of the present invention, is shown in FIGS. 4A & 4B.

The cooking utensil 200 incorporates an inner wall 210 comprising an electrically conductive target layer 218 a vacuum-sealed thermal insulator 250 and an outer wall 270 that are all of a pan-like shape with the inner wall 210 nested within the thermal insulator 250 and the thermal insulator 250 nested within the outer wall 270. Also, the inner wall 210 is joined at a continuous annular joint 220 to the outer wall 270, thereby defining and fully enclosing a gap 206 between the inner wall 210 and the outer wall 270 within which the thermal insulator 250 is disposed. The thermal insulator 250 of the cooking utensil 200 is a vacuum-sealed thermal insulator package incorporating a thermally resistant material 257 enclosed within a pair of sheets 256 and 258, and the gap 206 is filled with a gas that substantially resists transmitting heat. Also, different portions of the inner wall 210 incorporate one and three layers

Referring to FIG. 4A, the inner wall 210 has an inner surface 211 defining a cooking chamber 201 and an outer surface 212 facing the thermal insulator 250 and the outer wall 270 beyond the thermal insulator 250. Within side wall portions 204 of the cooking utensil 200, the inner wall 210 incorporates a cooking layer 216, and within the bottom portion 203, the inner wall 210 additionally incorporates a spreader layer 217 and a target layer 218. The outer wall 270 has an inner surface 271 facing the thermal insulator 250 and the inner wall 210 beyond the thermal insulator 250, and an outer surface 272 defining much of the exterior of the cooking utensil 200. The outer wall 270 incorporates a non-conductive layer 277 that defines substantially all of the inner surface 271 and the outer surface 272. It should be noted that despite this depiction of a single-layer outer wall 270, other implementations may additionally incorporate a reflective layer disposed on the inner surface 271 and/or decorative material disposed on the outer surface 272.

Portions of the inner wall 210 and the outer wall 270 meet at the joint 220, and the joint 220 cooperates with these portions of the inner wall 210 and the outer wall 270 to form a gas-tight seal that separates the environment within the gap 206 from the environment external to the gap 206. The gap 206 is filled with a gas that substantially resists transferring heat, and is preferably at a pressure that balances providing resistance to heat transfer with providing sufficient pressure within the gap 206 to resist the outerwall 270 being pressed into the gap 206. Those skilled in the art will readily recognize that other implementations of the cooking utensil 200 having one or both of a passage opening into the gap 206 by which a desired gaseous environment may be created and/or maintained within the gap 206 and of a piece of getter material disposed within the gap 206 may be resorted to.

The thermal insulator 250 has an inner surface 251 facing the outer surface 212 of the inner wall 210, and an outer surface 252 facing the inner surface 271 of the outer wall 270. The sheet 256 defines substantially all of the inner surface 251, and the sheet 258 defines substantially all of the outer surface 252. Depending on the ability of the composition of material from which the sheet 256 is made to withstand heat, the thermal insulator 250 is disposed within the gap 206 with the inner surface 251 spaced away from the outer surface 212 of the inner wall 210 to avoid damage from direct contact with the inner wall 210 at times when the inner wall 210 is heated. In some implementations, this spaced apart position of the thermal insulator 250 from the inner wall 210 is accomplished by adhering or otherwise affixing the thermal insulator 250 to the inner surface 271 of the outer wall 270. One or both of the sheets 256 and 258 may be formed of a metalized polymer, a film of any of a variety of types incorporating silicon-dioxide, or other appropriate material having some degree of resistance to damage by exposure to heat and some degree of impermeability to gas molecules. The thermally resistant material 257 may be any of a variety of insulating materials including, and not limited to, a carbon aerogel or a silica aerogel incorporating carbon.

Referring to FIG. 4B, the thermal insulator 250 is preferably separately assembled prior to the assembly of the cooking utensil 200. Also, the outer surface 252 of the thermal insulator 250 is preferably affixed to the inner surface 271 of the outer wall 270 during assembly of the cooking utensil 200 to achieve the spaced apart relationship between the inner surface 251 and the outer surface 212 of the inner wall 210. As previously discussed, with the cooking utensil 200 assembled as described and depicted, the outer surface 212 of the inner wall 210 faces the inner surface 251 of the thermal insulator 250, and the outer surface 252 of the thermal insulator 250 faces the inner surface 271 of the outer wall 270.

The gaseous environment within the gap 206, the thermal insulator 250 and the outer wall 270 cooperate to maintain the outer surface 272 at a relatively cool temperature as the target layer 218 of the inner wall 210 is caused to become heated through magnetic induction. The gaseous environment within the gap 206 resists the transfer of heat emanating from the outer surface 212 of the inner wall 210 to the inner surface 251 of the thermal insulator 250. The thermally resistant material 257 of the insulator 250 resists the transfer of heat that does pass through the gaseous environment within the gap 206 between the inner surface 251 and the outer surface 252. The non-conductive layer 277 of the outer wall 270 resists transferring the heat that does pass through both the gaseous environment and the thermal insulator 250 between the inner surface 271 and the outer surface 272.

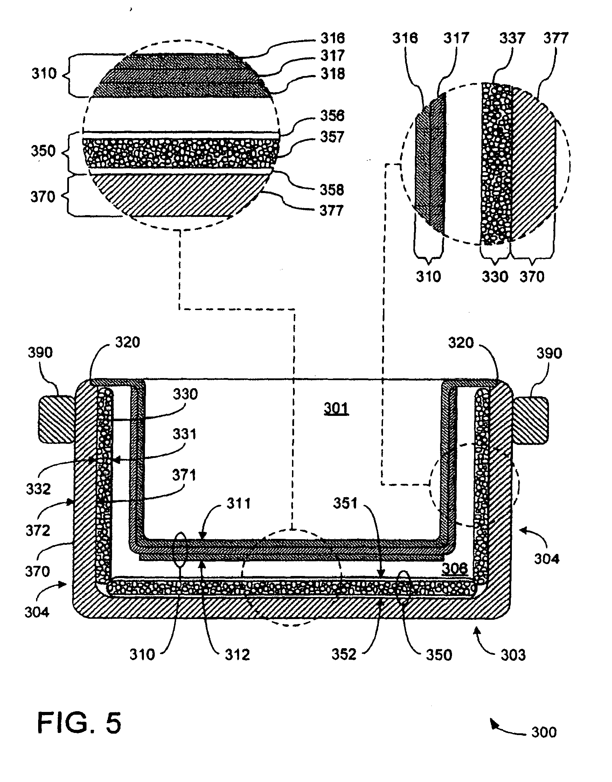

FIG. 5 depicts a cooking utensil 300 that has substantial similarities to the cooking utensil 200 of FIGS. 4A and 4B. Like the cooking utensil 200, the cooking utensil 300 incorporates an inner wall 310 and an outer wall 370 that are both of a pan-like shape with the inner wall 310 nested within the outer wall 370. Also like the cooking utensil 200, the inner wall 310 is joined at a continuous annular joint 320 to the outer wall 370, thereby defining and fully enclosing a gap 306 between the inner wall 310 and the outer wall 370 within which a vacuum-sealed thermal insulator 350 is disposed. However, unlike the cooking utensil 200, the thermal insulator 350 is not of a pan-like shape, is disposed substantially within the bottom portion 303 of the cooking utensil 300, and is accompanied by a thermal mat 330 disposed within the gap 306 within side wall portions 304 of the cooking utensil 300. Also unlike the cooking utensil 200, the inner wall 310 has two-layer and three-layer portions. In light of the similarities between the cooking utensil 300 and the cooking utensil 200, corresponding features are labeled with numerals in which the last two digits also correspond.

The inner wall 310 has an inner surface 311 defining a cooking chamber 301 and an outer surface 312. Within side wall portions 304 of the cooking utensil 300, the inner wall 310 incorporates a cooking layer 316 and a spreader layer 317, and within the bottom portion 303, the inner wall 310 additionally incorporates a target layer 318. The cooking layer 316 defines substantially all of inner surface 311 of the inner wall 310, while the outer surface 312 is defined by the spreader layer 317 within the side wall portions 304 and by the target layer 318 within the bottom portion 303. The portion of the outer surface 312 within the bottom portion 303 of the cooking utensil 300 faces the thermal insulator 350, while the portion of the outer surface 312 within the side wall portions 304 faces the thermal mat 330. Heat is generated in the target layer 318 of the inner wall 310 by a magnetic field generated by an induction coil of an induction cooktop. The spreader layer 317 conducts the heat generated in the target layer 318 to the cooking layer 316 while also spreading that heat more evenly so that the majority of the cooking layer 316 within both the bottom portion 303 and the side wall portions 304 of the cooking utensil 300 is able to provide a more evenly heated cooking surface.

The outer wall 370 has an inner surface 371 and has an outer surface 372 defining much of the exterior of the cooking utensil 300. The outer wall 370 incorporates a non-conductive layer 377 that defines substantially all of the inner surface 371 and the outer surface 372. The portion of the inner surface 371 within the bottom portion 303 of the cooking utensil 300 faces the thermal insulator 350, while the portion of the inner surface 371 within the side wall portions 304 faces the thermal mat 330.

Portions of the innerwall 310 and the outer wall 370 meet at the joint 320, and the joint 320 cooperates with these portions of the inner wall 310 and the outer wall 370 to form a gas-tight seal that separates the environment within the gap 306 from the environment external to the gap 306. The gap 306 is filled with a gas that substantially resists transferring heat, and is preferably at a pressure that balances providing resistance to heat transfer with providing sufficient pressure within the gap 306 to resist the outer wall 370 being pressed into the gap 306.

The thermal insulator 350 is disposed within the bottom portion 303 of the cooking utensil 300, has an inner surface 351 facing the outer surface 312 of the inner wall 310, and an outer surface 352 facing the inner surface 371 of the outer wall 370. The thermal insulator 350 incorporates a thermally resistant material 357 and a pair of sheets 356 and 358 between which the thermally resistant material 357 is vacuum-sealed. The sheet 356 defines substantially all of the inner surface 351, and the sheet 358 defines substantially all of the outer surface 352. Depending on the composition of material from which the sheet 356 is made, the thermal insulator 350 is disposed within the gap 306 with the inner surface 351 spaced away from the outer surface 312 of the inner wall 310 to avoid damage from direct contact with the inner wall 310 at times when the inner wall 310 is heated.

The thermal mat 330 is disposed within the side wall portions 304 of the cooking utensil 300, has an inner surface 331 facing the outer surface 312 of the inner wall 310, and an outer surface 332 facing the inner surface 371 of the outer wall 370. The thermal mat may be formed of any of a variety of insulating materials including, and not limited to, fibrous material supporting particles of a aerogel (e.g., a silica aerogel incorporating carbon black). The thermal mat 330 is preferably disposed within the gap 306 with the inner surface 331 spaced away from the outer surface 312 of the inner wall 310 to avoid damage from direct contact with the inner wall 310 at times when the inner wall 310 is heated.

With the cooking utensil 300 assembled as described and depicted, the gaseous environment within the gap 306, the thermal mat 330, the thermal insulator 350, and the outerwall 370 cooperate to maintain the outer surface 372 at a relatively cool temperature as the target layer 318 of the inner wall 310 is caused to become heated through magnetic induction. The gaseous environment within the gap 306 resists the transfer of heat emanating from the outer surface 312 of the inner wall 310 to both the inner surface 331 of the thermal mat 330 and the inner surface 351 of the thermal insulator 350. The thermal mat 330 resists the transfer of heat that does pass through the gaseous environment within the gap 306 between the inner surface 331 and the outer surface 332, and the thermal insulator 350 resists the transfer of heat between the inner surface 351 and the outer surface 352. The non-conductive layer 377 of the outer wall 370 resists transferring the heat that does pass through both the gaseous environment and either the thermal mat 330 or the thermal insulator 350 to the outer surface 372.

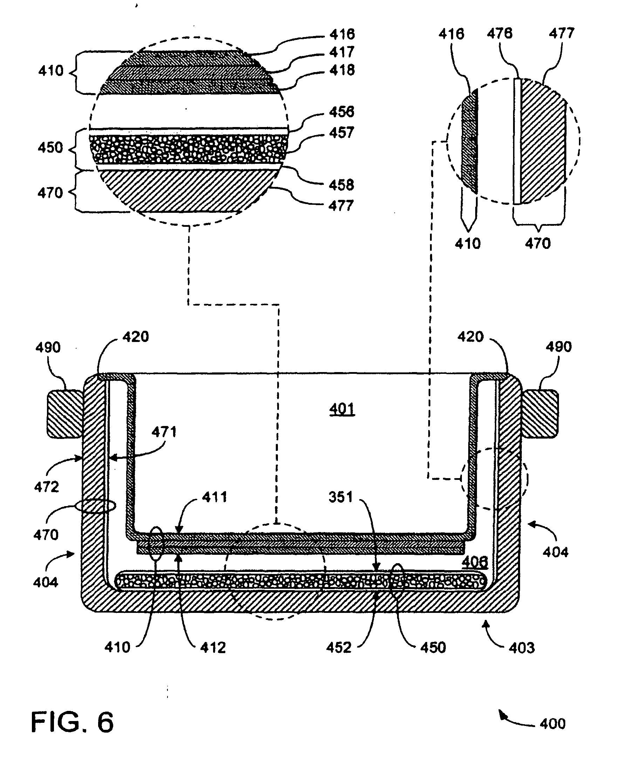

FIG. 6 depicts a cooking utensil 400 that has substantial similarities to the cooking utensil 300 of FIG. 5. Like the cooking utensil 300, the cooking utensil 400 incorporates an inner wall 410 and an outer wall 470 that are both of a pan-like shape with the inner wall 410 nested within the outer wall 470. Also like the cooking utensil 300, the inner wall 410 is joined at a continuous annular joint 420 to the outer wall 470, thereby defining and fully enclosing a gap 406 between the inner wall 410 and the outer wall 470 within which a vacuum-sealed thermal insulator 450 is disposed. Further, like the cooking utensil 300, the thermal insulator 450 is not of a pan-like shape, and is disposed within the gap 406 substantially within the bottom portion 403 of the cooking utensil 400. However, unlike the cooking utensil 300, and more like the cooking utensil 100, the inner wall 410 has one-layer and three-layer portions, and within the side wall portions 404 of the cooking utensil, the outer wall 470 incorporates a reflective layer 476. In light of the similarities between the cooking utensil 400 and the cooking utensil 300, corresponding features are labeled with numerals in which the last two digits also correspond.

The inner wall 410 has an inner surface 411 defining a cooking chamber 401 and an outer surface 412. Within side wall portions 404 of the cooking utensil 400, the inner wall 410 incorporates a cooking layer 416, and within the bottom portion 403, the inner wall 410 additionally incorporates a spreader layer 417 and a target layer 418. The cooking layer 416 defines substantially all of inner surface 411 of the inner wall 410, while the outer surface 412 is defined by the cooking layer 416 within the side wall portions 404 and by the target layer 418 within the bottom portion 403. The portion of the outer surface 412 within the bottom portion 403 of the cooking utensil 400 faces the thermal insulator 450, while the portion of the outer surface 412 within the side wall portions 404 faces the reflective layer 476 of the outer wall 470. Heat is generated in the target layer 418 of the inner wall 410 by a magnetic field generated by an induction coil of an induction cooktop. The spreader layer 417 conducts the heat generated in the target layer 418 to the cooking layer 416 while also spreading that heat more evenly so that at least the portion of the cooking layer 416 that is within the bottom portion 403 is able to provide a more evenly heated cooking surface.

The outer wall 470 has an inner surface 471 and has an outer surface 472 defining much of the exterior of the cooking utensil 400. Within the bottom portion 403 of the cooking utensil 400, the outer wall 470 incorporates a non-conductive layer 477, and within the side wall portions 404, the outer wall 470 additionally incorporates a reflective layer 476. The non-conductive layer 477 defines substantially all of the outer surface 472 of the outer wall 470, while the inner surface 471 is defined by the reflective layer 476 within the side wall portions 404 and by the non-conductive layer 477 within the bottom portion 403. The portion of the inner surface 471 within the bottom portion 403 of the cooking utensil 400 faces the thermal insulator 450, while the portion of the inner surface 471 within the side wall portions 404 faces the inner wall 410. It should be noted that despite this depiction of the reflective layer 476 being within only the side wall portions 404, other implementations may incorporate the reflective layer 476 in both bottom portion 403 or the side wall portions 404.

Portions of the inner wall 410 and the outer wall 470 meet at the joint 420, and the joint 420 cooperates with these portions of the inner wall 410 and the outer wall 470 to form a gas-tight seal that separates the environment within the gap 406 from the environment external to the gap 406. The gap 406 is filled with a gas that substantially resists transferring heat, and is preferably at a pressure that balances providing resistance to heat transfer with providing sufficient pressure within the gap 406 to resist the outer wall 470 being pressed into the gap 406.

The thermal insulator 450 is disposed within the bottom portion 403 of the cooking utensil 400, has an inner surface 451 facing the outer surface 412 of the inner wall 410, and an outer surface 452 facing the inner surface 471 of the outer wall 470. As depicted, the thermal insulator 450 is substantially coplanar with the target layer 418 of the inner wall 410, but has a larger surface area than the target layer 418 such that the edges of the thermal insulator 450 extend further across the bottom portion 403 of the cooking utensil 400 than the target layer 418. This greater reach of the thermal insulator 450 across the bottom portion 403 may be deemed desirable to help resist the transmission of heat to locations where portions of the outer wall 470 within the side wall portions 404 and the bottom portion 403 meet. The thermal insulator 450 incorporates a thermally resistant material 457 and a pair of sheets 456 and 458 between which the thermally resistant material 457 is vacuum-sealed. The sheet 456 defines substantially all of the inner surface 451, and the sheet 458 defines substantially all of the outer surface 452. Depending on the composition of material from which the sheet 456 is made, the thermal insulator 450 is disposed within the gap 406 with the inner surface 451 spaced away from the outer surface 412 of the inner wall 410 to avoid damage from direct contact with the inner wall 410 at times when the inner wall 410 is heated.

With the cooking utensil 400 assembled as described and depicted, the gaseous environment within the gap 406, the thermal insulator 450, the reflective layer 476 and the non-conductive layer 477 cooperate to maintain the outer surface 472 at a relatively cool temperature as the target layer 418 of the inner wall 410 is caused to become heated through magnetic induction. The gaseous environment within the gap 406 resists the transfer of heat emanating from the outer surface 412 of the inner wall 410 to both the inner surface 451 of the thermal insulator 450 and the reflective layer 476 of the outer wall 470. The thermal insulator 450 resists the transfer of heat that does pass through the gaseous environment within the gap 406 between the inner surface 451 and the outer surface 452, and the reflective layer 476 reflects heat away from the outer wall 470. The non-conductive layer 477 of the outer wall 470 resists transferring the heat that does pass through both the gaseous environment and either the thermal insulator 450 or the reflective layer 476 to the outer surface 472.

It should be noted that despite the description of the gaps 206, 306 and 406 of the cooking utensils 200, 300 and 400, respectively, as being filled with a gas, other implementations of one or more of these cooking utensils may be resorted to in which a vacuum is enclosed in one or more of these gaps.

A number of embodiments of the invention have been described. Nevertheless, it will be understood that various modifications may be made without departing from the scope of the invention such as defined by the claims, and, accordingly, other embodiments are within the scope of the following claims.

## Claims

1. A cooking utensil (50') for use with an induction cooktop having an induction coil, the cooking utensil comprising:
an inner wall (52') comprising an electrically conductive target layer in which heat is generated by the induction coil; and
an outer wall (54') within which the inner wall is nested and comprising an electrically non-conductive layer that cooperates with the inner wall to form a sealed gap (59') between the inner wall and the outer wall and further cooperates with the inner wall to provide the cooking utensil a pan-like shape having a bottom portion and a side wall portion; **characterised in that** the cooking utensil comprises
a vacuum-sealed thermal insulator (53) disposed within the gap within at least the bottom portion and spaced away from contact with the inner wall by a portion of the gap, wherein the vacuum-sealed thermal insulator is comprised of a thermally resistant material (58') and a pair of sheets (56',57') enclosing the thermally resistant material in a vacuum.

2. The cooking utensil (50') of claim 1, wherein the outer wall has a reflective layer (56') disposed on a surface of the outer wall (54') that defines a portion of the gap and faces the inner wall.

3. The cooking utensil (50') of claim 2, wherein the reflective layer (56') is non-contiguous to interrupt a flow of a current induced in the reflective layer by the induction coil.

4. The cooking utensil (50') of claim 1, wherein the outer wall (54') further comprises an impermeable material to aid in reducing the permeation of an atmospheric gas through the outer wall and into the gap.

5. The cooking utensil (50') of claim 1, wherein the inner wall (52') further comprises a heat spreader layer and a cooking layer.

6. The cooking utensil (50') of claim 5, wherein the inner wall (52') has a pan-like shape having a substantially flat bottom portion, having an inner surface defining a cooking chamber, and having an outer surface that defines a portion of the gap and faces the outer wall, wherein:
the cooking layer provides substantially all of the inner surface;
the target layer provides the outer surface within the bottom portion; and
the heat spreader layer conducts heat generated in the target layer to at least the cooking layer within the bottom portion.

7. The cooking utensil (50') of claim 1, wherein the thermally resistant material (58') of the vacuum-sealed thermal insulator (53) comprises an aerogel.

8. The cooking utensil (50') of claim 1, wherein at least one sheet of the pair of sheets (56',57') of the vacuum-sealed thermal insulator (53) comprises silicon-dioxide.

9. The cooking utensil (50') of claim 1, wherein at least one sheet of the pair of sheets (56',57') of the vacuum-sealed thermal insulator (53) comprises a metalized polymer.

10. The cooking utensil (50') of claim 1, wherein the vacuum-sealed thermal insulator (53) is affixed to an inner surface of the outer wall (54') that defines a portion of the gap (59').

11. The cooking utensil (50') of claim 1, further comprising a thermal mat (330) disposed within a portion of the gap within the side wall portion, wherein the thermal mat comprises a fibrous material and an aerogel, and wherein the thermal mat is affixed to a surface of the outer wall that defines a portion of the gap.

12. The cooking utensil (50') of claim 1, wherein the target layer (318) is disposed within a portion of the gap within the bottom portion, and wherein the vacuum-sealed thermal insulator (350) extends further across the bottom portion than does the target layer.

13. The cooking utensil (50') of claim 1, further comprising a piece of getter material disposed within the gap to remove a gas other than argon gas.

14. A method of making a cooking utensil (50'), the method comprising:
joining an outer wall (54') comprising an electrically non-conductive layer to an inner wall (52') comprising an electrically conductive target layer in which heat is able to be generated by an induction coil of an induction cooktop to define a gap (59') between the inner wall and the outer wall such that the inner wall is nested within the outer wall and such that the inner wall and the outer wall cooperate to provide the cooking utensil with a pan-like shape having a bottom portion and a side wall portion; **characterised in that** the method comprises
disposing within the gap, spaced away from contact with the inner wall by a portion of the gap and within at least the bottom portion, a vacuum-sealed thermal insulator (53) comprising a thermally resistant material (58') and a pair of sheets (56',57') enclosing the thermally resistant material in a vacuum.

15. The method of claim 14, further comprising:
disposing a piece of getter material within the gap; and
activating the getter material subsequent to joining the outer wall to the inner wall to remove a gas other than argon from within the gap.

## Patentansprüche

1. Kochgeschirr (50') zur Verwendung mit einem Induktions-Kochfeld, das eine Induktionsspule aufweist, wobei das Kochgeschirr umfasst:
eine Innenwand (52'), die eine elektrisch leitende Zielschicht umfasst, in der Wärme durch die Induktionsspule erzeugt wird; und
eine Außenwand (54'), innerhalb der die Innenwand eingenistet ist und eine elektrisch nicht leitende Schicht umfasst, die mit der Innenwand kooperiert, um einen abgedichteten Spalt (59') zwischen der Innenwand und der Außenwand zu bilden und weiter mit der Innenwand kooperiert, um dem Kochgeschirr eine pfannenartige Form bereitzustellen, die einen Bodenteil und einen Seitenwandteil aufweist; **dadurch gekennzeichnet, dass** das Kochgeschirr umfasst:
einen vakuumversiegelten Wärmeisolator (53), der innerhalb des Spalts innerhalb zumindest des Bodenteils angeordnet und weg von Kontakt mit der Innenwand durch einen Teil des Spalts beabstandet ist, wobei der vakuumversiegelte Wärmeisolator aus einem wärmebeständigen Material (58') besteht und ein Paar von Platten (56', 57') das wärmebeständige Material in einem Vakuum einschließen.

2. Kochgeschirr (50') des Anspruchs 1, wobei die Außenwand eine reflektierende Schicht (56') aufweist, die auf einer Oberfläche der Außenwand (54') angeordnet ist, welche einen Teil des Spalts definiert und der Innenwand gegenüberliegt.

3. Kochgeschirr (50') des Anspruchs 2, wobei die reflektierende Schicht (56') nicht zusammenhängend ist, um einen durch die Induktionsspule in der reflektierenden Schicht induzierten Stromfluss zu unterbrechen.

4. Kochgeschirr (50') des Anspruchs 1, wobei die Außenwand (54') weiter ein undurchlässiges Material umfasst, um Reduzieren der Permeation eines atmosphärischen Gases durch die Außenwand und in den Spalt zu unterstützen.

5. Kochgeschirr (50') des Anspruchs 1, wobei die Innenwand (52') weiter eine Wärmeausbreitungsschicht und eine Kochschicht umfasst.

6. Kochgeschirr (50') des Anspruchs 5, wobei die Innenwand (52') eine pfannenartige Form mit einem im Wesentlichen flachen Bodenteil aufweist, der eine Innenfläche hat, die eine Kochkammer definiert und eine Außenfläche hat, die einen Teil des Spalts definiert und der Außenwand gegenüberliegt, wobei:
die Kochschicht im Wesentlichen die ganze Innenfläche bereitstellt;
die Zielfläche die Außenfläche innerhalb des Bodenteils bereitstellt; und
die Wärmeausbreitungsschicht in der Zielschicht erzeugte Wärme zumindest zur Kochschicht innerhalb des Bodenteils leitet.

7. Kochgeschirr (50') des Anspruchs 1, wobei wärmebeständiges Material (58') des vakuumversiegelten Wärmeisolators (53) ein Aerogel umfasst.

8. Kochgeschirr (50') des Anspruchs 1, wobei zumindest eine Platte des Paars von Platten (56, 57') des vakuumversiegelten Wärmeisolators (53) Siliziumdioxid umfasst.

9. Kochgeschirr (50') des Anspruchs 1, wobei zumindest eine Platte des Paars von Platten (56, 57') des vakuumversiegelten Wärmeisolators (53) ein metallisiertes Polymer umfasst.

10. Kochgeschirr (50') des Anspruchs 1, wobei der vakuumversiegelte Wärmeisolator (53) an einer Innenfläche der Außenwand (54') befestigt ist, die einen Teil des Spalts (59') definiert.

11. Kochgeschirr (50') des Anspruchs 1, das weiter eine Wärmematte (330) umfasst, die innerhalb eines Teils des Spalts innerhalb des Seitenwandteils angeordnet ist, wobei die Wärmematte ein fibröses Material und ein Aerogel umfasst und, wobei die Wärmematte an einer Oberfläche der Außenwand befestigt ist, die einen Teil des Spalts definiert.

12. Kochgeschirr (50') des Anspruchs 1, wobei die Zielschicht (318) innerhalb eines Teils des Spalts innerhalb des Bodenteils angeordnet ist und, wobei sich der vakuumversiegelte Wärmeisolator (350) weiter als die Zielschicht über den Bodenteil erstreckt.

13. Kochgeschirr (50') des Anspruchs 1, die weiter ein Stück Gettermaterial umfasst, das innerhalb des Spalts angeordnet ist, um ein Gas anders als Argongas zu entfernen.

14. Verfahren zur Herstellung eines Kochgeschirrs (50'), wobei das Verfahren umfasst:
Verbinden einer Außenwand (54'), die eine elektrisch nicht leitende Schicht umfasst, mit einer Innenwand (52'), die eine elektrisch leitende Zielschicht umfasst, in der Wärme durch eine Induktionsspule eines Induktions-Kochfelds erzeugt werden kann, um einen Spalt (59') zwischen der Innenwand und der Außenwand zu definieren, sodass die Innenwand innerhalb der Außenwand eingenistet ist und, sodass die Innenwand und die Außenwand kooperieren, um das Kochgeschirr mit einer pfannenartigen Form zu versehen, die einen Bodenteil und einen Seitenwandteil aufweist; **dadurch gekennzeichnet, dass** das Verfahren umfasst:
Anordnen innerhalb des Spalts, beabstandet von Kontakt mit der Innenwand durch einen Teil des Spalts und innerhalb zumindest des Bodenteils, eines vakuumversiegelten Wärmeisolator (53), der ein wärmebeständiges Material (58') und ein Paar von Platten (56', 57') umfasst, die das wärmebeständige Material in einem Vakuum einschließen.

15. Verfahren nach Anspruch 14, weiter umfassend:
Anordnen eines Stücks Gettermaterials innerhalb des Spalts; und
Aktivieren des Gettermaterials anschließend an das Verbinden der Außenwand mit der Innenwand, um ein Gas anders als Argon aus dem Spalt zu entfernen.

## Revendications

1. Ustensile de cuisine (50') destiné à être utilisé avec une table de cuisson à induction ayant une bobine d'induction, l'ustensile de cuisine comportant :
une paroi intérieure (52') comportant une couche cible conductrice d'électricité dans laquelle de la chaleur est générée par la bobine d'induction ; et
une paroi extérieure (54') à l'intérieur de laquelle la paroi intérieure est emboîtée et comportant une couche non conductrice d'électricité qui coopère avec la paroi intérieure en vue de former un espace scellé (59') entre la paroi intérieure et la paroi extérieure et coopère par ailleurs avec la paroi intérieure en vue de fournir à l'ustensile de cuisine une forme similaire à une casserole ayant une partie fond et une partie paroi latérale ; **caractérisé en ce que** l'ustensile de cuisine comporte
un isolant thermique scellé sous vide (53) disposé à l'intérieur de l'espace à l'intérieur au moins de la partie fond et séparé de tout contact avec la paroi intérieure par une partie de l'espace, dans lequel l'isolant thermique scellé sous vide comporte un matériau thermiquement résistant (58') et une paire de feuilles (56', 57') renfermant le matériau thermiquement résistant dans un vide.

2. Ustensile de cuisine (50') selon la revendication 1, dans lequel la paroi extérieure a une couche réfléchissante (56') disposée sur une surface de la paroi extérieure (54') qui définit une partie de l'espace et est orientée vers la paroi intérieure.

3. Ustensile de cuisine (50') selon la revendication 2, dans lequel la couche réfléchissante (56') est non contiguë en vue d'interrompre un écoulement d'un courant induit dans la couche réfléchissante par la bobine d'induction.

4. Ustensile de cuisine (50') selon la revendication 1, dans lequel la paroi extérieure (54') comporte par ailleurs un matériau imperméable destiné à faciliter la réduction de la perméation d'un gaz atmosphérique au travers de la paroi extérieure et jusque dans l'espace.

5. Ustensile de cuisine (50') selon la revendication 1, dans lequel la paroi intérieure (52') comporte par ailleurs une couche dissipatrice de chaleur et une couche de cuisson.

6. Ustensile de cuisine (50') selon la revendication 5, dans lequel la paroi intérieure (52') a une forme similaire à une casserole ayant une partie fond sensiblement plate, ayant une surface intérieure définissant une chambre de cuisson, et ayant une surface extérieure qui définit une partie de l'espace et est orientée vers la paroi extérieure, dans lequel :
la couche de cuisson procure sensiblement l'intégralité de la surface intérieure ;
la couche cible procure la surface extérieure à l'intérieur de la partie fond ; et
la couche dissipatrice de chaleur conduit de la chaleur générée dans la couche cible au moins jusqu'à la couche de cuisson à l'intérieur de la partie fond.

7. Ustensile de cuisine (50') selon la revendication 1, dans lequel le matériau thermiquement résistant (58') de l'isolant thermique scellé sous vide (53) est constitué d'un aérogel.

8. Ustensile de cuisine (50') selon la revendication 1, dans lequel au moins une feuille de la paire de feuilles (56', 57') de l'isolant thermique scellé sous vide (53) est constituée de dioxyde de silicium.

9. Ustensile de cuisine (50') selon la revendication 1, dans lequel au moins une feuille de la paire de feuilles (56', 57') de l'isolant thermique scellé sous vide (53) est constituée d'un polymère métallisé.

10. Ustensile de cuisine (50') selon la revendication 1, dans lequel l'isolant thermique scellé sous vide (53) est fixé sur une surface intérieure de la paroi extérieure (54') qui définit une partie de l'espace (59').

11. Ustensile de cuisine (50') selon la revendication 1, comportant par ailleurs un tapis thermique (330) disposé à l'intérieur d'une partie de l'espace à l'intérieur de la partie paroi latérale, dans lequel le tapis thermique comporte un matériau fibreux et un aérogel, et dans lequel le tapis thermique est fixé sur une surface de la paroi extérieure qui définit une partie de l'espace.

12. Ustensile de cuisine (50') selon la revendication 1, dans lequel la couche cible (318) est disposée à l'intérieur d'une partie de l'espace à l'intérieur de la partie fond, et dans lequel l'isolant thermique scellé sous vide (350) s'étend plus encore en travers de la partie fond que ne le fait la couche cible.

13. Ustensile de cuisine (50') selon la revendication 1, comportant par ailleurs un morceau de matériau à getter disposé à l'intérieur de l'espace en vue de supprimer un gaz autre que du gaz argon.

14. Procédé de fabrication d'un ustensile de cuisine (50'), le procédé comportant :
la jonction d'une paroi extérieure (54') comportant une couche non conductrice d'électricité et d'une paroi intérieure (52') comportant une couche cible conductrice d'électricité dans laquelle de la chaleur est en mesure d'être générée par une bobine d'induction d'une table de cuisson à induction en vue de définir un espace (59') entre la paroi intérieure et la paroi extérieure de sorte que la paroi intérieure est emboîtée à l'intérieur de la paroi extérieure et de sorte que la paroi intérieure et la paroi extérieure coopèrent en vue de fournir à l'ustensile de cuisine une forme similaire à une casserole ayant une partie fond et une partie paroi latérale ; **caractérisé en ce que** le procédé comporte
la disposition à l'intérieur de l'espace, séparé de tout contact avec la paroi intérieure par une partie de l'espace et à l'intérieur au moins de la partie fond, d'un isolant thermique scellé sous vide (53) comportant un matériau thermiquement résistant (58') et une paire de feuilles (56', 57') renfermant le matériau thermiquement résistant dans un vide.

15. Procédé selon la revendication 14, comportant par ailleurs :
la disposition d'un morceau de matériau à getter à l'intérieur de l'espace ; et
l'activation du matériau à getter suite à la jonction de la paroi extérieure et de la paroi intérieure en vue de supprimer un gaz autre que du gaz argon depuis l'intérieur de l'espace.
